# FASCICULE DE BREVET EUROPEEN

(11) **EP 0 856 296 B1**
(45) Date de publication et mention de la délivrance du brevet: **29.06.2005**
(21) Numéro de dépôt: 97470025.4
(22) Date de dépôt: 03.11.1997
(51) Int. Cl.: A61C 5/02

(54) **Procédé pour la fabrication d'alésoirs dentaire en alliage nickel-titane**
Verfahren zur Herstellung von dentalen Aufbereitungsinstrumenten aus Nickel-Titan-Legierung
Method for the manufacture of dental reamers from nickel-titanium alloy

(30) Priorité: 29.01.1997 FR 9701131
(43) Date de publication de la demande: 05.08.1998
(73) Titulaire: MICRO MEGA INTERNATIONAL MANUFACTURES (Société Anonyme), 25000 Besançon (FR)
(72) Inventeur: Euvrard, Hubert, Auxon-Dessus, 25870 Geneuille (FR); Chevillot, Denis, 25480 Miserey Salines (FR)
(74) Mandataire: Poupon, Michel

(56) Documents cités:
- US-A- 5 464 362

## Description

La présente invention a pour objet un procédé pour la fabrication d'alésoirs dentaires en alliage Nickel-Titane (connu sous le nom de NITI).

Les alésoirs dentaires sont principalement fabriqués à partir d'une ébauche métallique cylindrique généralement composés de au moins 40 % de Titane, bien que cette proportion ne soit pas critique pour la mise en oeuvre du procédé.

La tige-ébauche métallique est déplacée à une vitesse d'alimentation V_{A} devant une meule rotative dont le disque, de diamètre variable, détermine une vitesse linéaire V_{L} d'enlévement de matière de la tige par la meule rotative.

Un autre paramètre important est déterminé par la taille D_{G} du grain de la meule, qui est en l'occurrence généralement une meule diamantée.

On a déjà décrit dans le brevet US 5 464 362 un procédé de ce type dans lequel les valeurs revendiquées et décrites sont les suivantes :
- V_{A} comprise entre 7,62 et 20,32 cm/mn,
- D_{G} supérieure à 200 grains.

Le document WO 97/39696 décrit un procédé suivant le préambule de la revendication 1.

De manière surprenante et en totale contradiction avec ce qui est présenté comme état des conditions optimales dans le procédé de l'art antérieur, il a été montré que des conditions de fonctionnement opposées donnaient des résultats au moins égaux.

La présente invention a en conséquence pour objet un procédé pour la fabrication d'alésoirs dentaires en alliage Nickel-Titane, lesdits alésoirs dentaires étant fabriqués à partir d'une ébauche métallique cylindrique déplacée à une vitesse d'alimentation V_{A} devant une meule rotative dont le disque de diamètre variable détermine une vitesse linéaire V_{L} d'enlèvement de matière, caractérisé en ce que les paramètres sont les suivants
- V_{L} = 2213 m/mn
- V_{A} = 3,2 cm/mn.
et en ce que la meule sera une meule diamantée.

De manière avantageuse, les grains de la meule auront un grain supérieur à 46 µ.

Bien entendu on comprendra que tous les autres éléments de mise en oeuvre du procédé restent identiques à ceux du procédé de l'art antérieur.

## Revendications

1. Procédé pour la fabrication d'alésoirs dentaires en alliage Nickel-Titane, lesdits alésoirs dentaires étant fabriqués à partir d'une ébauche métallique cylindrique déplacée à une vitesse d'alimentation V_{A} devant une meule rotative dont le disque de diamètre variable détermine une vitesse linéaire V_{L} d'enlèvement de matière, **caractérisé en ce que** les paramètres sont les suivants :
V_{L} = 2213 m/mn
V_{A} = 3.2 cm/mn
et **en ce que** la meule est une meule diamantée.

2. Procédé selon la revendication 1, **caractérisé en ce que** les grains de la meule ont un grain supérieur à 46 µ.

## Patentansprüche

1. Herstellungsverfahren für Zahnbohrer aus Nickel-TitanLegierung, wobei die Zahnbohrer aus einem zylindrischen metallischen Rohling hergestellt werden, der mit einer Zuführungsgeschwindigkeit Vₐ vor einer rotierenden Schleifscheibe bewegt wird, wobei die Scheibe mit variablem Durchmesser eine lineare Materialabtragsgeschwindigkeit V_{L} festlegt, **dadurch gekennzeichnet, dass** die Parameter sind wie folgt:
V_{L} = 2213 m/mn
V_{A} = 3,2 cm/mn
und **dadurch**, dass die Schleifscheibe eine Diamantschleifscheibe ist.

2. Verfahren nach Anspruch 1, **dadurch gekennzeichnet, dass** die Körner der Schleifscheibe eine Körnung von mehr als 46 µ aufweisen.

## Claims

1. Method of manufacturing dental reamers from a nickel-titanium alloy, said dental reamers being manufactured from a cylindrical metallic blank displaced at a feeding speed V_{A} in front of a rotary grinding wheel, the disc of variable diameter of which wheel determines a linear speed V_{L} for removing the material, **characterised in that** the parameters are as follows:
V_{L} = 2213 m/mn
V_{A} = 3.2 cm/mn,
and **in that** the grinding wheel is a grinding wheel set with diamonds.

2. Method according to claim 1, **characterised in that** the particles of the grinding wheel have a size greater than 46 µ.
